# EUROPÄISCHE PATENTSCHRIFT

(11) **EP 4 441 395 B1**
(45) Veröffentlichungstag und Bekanntmachung des Hinweises auf die Patenterteilung: **08.10.2025**
(21) Anmeldenummer: 22813549.7
(22) Anmeldetag: 07.11.2022
(51) Int. Cl.: F16H 57/04

(54) **ÖLFÜHRUNGSKANALTEIL FÜR DEN EINBAU IN EIN GETRIEBE UND GETRIEBE MIT EINEM ÖLFÜHRUNGSKANALTEIL**
OIL DUCT PART TO BE MOUNTED IN A TRANSMISSION, AND TRANSMISSION COMPRISING AN OIL DUCT PART
PIÈCE DE CONDUIT D'HUILE À MONTER DANS UNE TRANSMISSION ET TRANSMISSION COMPRENANT UNE PIÈCE DE CONDUIT D'HUILE

(30) Priorität: 30.11.2021 DE 102021213491
(43) Veröffentlichungstag der Anmeldung: 09.10.2024
(73) Patentinhaber: Robert Bosch GmbH, 70442 Stuttgart (DE)
(72) Erfinder: SARETZKI, Manfred, 70180 Stuttgart (DE); HEGEDUS, Csaba, 2030 Erd (HU); SCHLITTENBAUER, Tobias, 71732 Tamm (DE); ZOLD, Peter, 2051 Biatorbagy (HU)
(86) Internationale Anmeldenummer: PCT/EP2022/080923
(87) Internationale Veröffentlichungsnummer: WO 2023/099121

(56) Entgegenhaltungen:
- EP-A1- 2 700 849
- DE-B- 1 291 966
- JP-A- 2005 083 491

## Beschreibung

### Stand der Technik

Im Stand der Technik werden Getriebe für Kraftfahrzeuge insbesondere auch in Kombination mit einem elektromotorischen Antrieb eingesetzt. Dabei müssen die Getriebeelemente des Getriebes wie bei herkömmlichen Getrieben auch mit Öl geschmiert werden. Um den Getriebewirkungsgrad zu steigern und um Kosten zu senken, kann auf eine in herkömmlichen Getrieben oft eingesetzte Ölpumpe zur Getriebeschmierung verzichtet werden. Die Schmierung und Kühlung der Getriebeelemente erfolgt vorzugsweise durch eine passive Ölverteilung. Die Schmierung der rotierenden Getriebeelemente ist wichtig für die Zuverlässigkeit des Getriebes. Eine nicht ausreichende Schmierung kann eine Mangelversorgung der Lager der Getriebeelemente und der Dichtringe mit Öl bewirken. Dies kann zu einem erhöhten Verschleiß bis hin zum Ausfall der Getriebeelemente führen.

Aus der DE 10 2017 108 748 B3 ist ein Ölführungskanalteil für den Einbau in einem Kraftfahrzeuggetriebe bekannt. Das dargestellte Getriebe weist ein Getriebegehäuse und wenigstens ein in dem Getriebegehäuse angeordnetes Getriebezahnrad auf, das wenigstens teilweise in einem Ölsumpf des Getriebes angeordnet ist. Das rotierende Getriebezahnrad wälzt sich mit einem Abschnitt durch den Ölsumpf und nimmt dabei Öl auf. Ein Vorgang der in der Fachsprache oft auch als Planschen beschrieben wird. Um von dem Getriebezahnrad aufgenommenes Öl gezielter im Getriebe zu verteilen, wird im Stand der Technik ein brillenartiges Ölführungskanalteil verwandt, welches als Einlegeteil in das Getriebe eingesetzt werden kann. Das Ölführungskanalteil weist mehrere Blenden und einen Leitkanal mit einer Aufnahmeöffnung und einer Auslassöffnung auf, wobei der Leitkanal von der Aufnahmeöffnung bis zur Auslassöffnung eine Ölleitrichtung und eine senkrecht zur Ölleitrichtung umlaufend geschlossene Kanalwand aufweist. In der DE 10 2017 108 748 B3 wird die Kanalwand durch einen um eine Zahnradachse eines Getriebezahnrades des Getriebes gekrümmten Halbbogen-Hohlkörper gebildet, der sich in einem vorbestimmten Einbauzustand des Ölführungskanalteils überwiegend oberhalb eines Ölsumpfpegels des Getriebes befindet. Der gebogene Leitkanal weist eine als Fangmaul ausgebildete Aufnahmeöffnung zur Aufnahme von Öl auf, das von einem anderen Getriebezahnrad, welches mit dem von dem Halbbogen-Hohlkörper umgegebenen Getriebezahnrad kämmt, aufgeworfen und von dem zweiten Getriebezahnrad zu dem Fangmaul weiter transportiert wird. Ein von dem Fangmaul abgewandter und bis auf eine Drosselbohrung geschlossen ausgebildeter Endabschnitt des Halbbogen-Hohlkörpers bildet dabei einen Ölsammelbereich zur Ansammlung von durch den Leitkanal gefördertem Öl. Die Drosselbohrung bildet die einzige Auslassöffnung des Leitkanals und stellt daher gleichzeitig einen Ablauf für das Öl aus dem wenigstens einen Ölsammelbereich dar. Die Drosselbohrung befindet sich vertikal über dem Zahneingriffsbereich der beiden Getriebezahnräder, so dass der abfließende Ölstrom in deren Zahneingriffsbereich abfließt und die Kontaktflächen der Zähne benetzt.

Ein weiteres Ölführungskanalteil für den Einbau in ein Kraftfahrzeuggetriebe mit einem Ölsammelbereich, der ein erstes Sammelbecken aufweist, ist aus der EP 2 700 849 A1 bekannt.

### Offenbarung der Erfindung

Die Erfindung betrifft ein Ölführungskanalteil für den Einbau in ein Getriebe, insbesondere für den Einbau in ein Kraftfahrzeuggetriebe, wobei das Ölführungskanalteil einen Leitkanal mit einer Aufnahmeöffnung und mit einer Auslassöffnung aufweist, wobei der Leitkanal von der Aufnahmeöffnung bis zur Auslassöffnung eine Ölleitrichtung und eine senkrecht zur Ölleitrichtung umlaufend geschlossene Kanalwand aufweist, wobei das Ölführungskanalteil weiterhin wenigstens einen Ölsammelbereich zur Ansammlung von durch den Leitkanal geleitetem Öl aufweist, wobei das Ölführungskanalteil wenigstens einen Ablauf für Öl aus dem wenigstens einen Ölsammelbereich aufweist. Erfindungsgemäß weist der wenigstens eine Ölsammelbereich ein erstes Sammelbecken mit einer ersten Beckenwand und einem ersten Beckenboden und ein zweites Sammelbecken mit einer zweiten Beckenwand und einem zweiten Beckenboden auf, wobei der Leitkanal derart an die erste Beckenwand und die zweite Beckenwand angrenzt, dass in der Ölleitrichtung des Leitkanals gesehen der erste Beckenboden zwischen der Aufnahmeöffnung und der Auslassöffnung und der zweite Beckenboden zwischen der Aufnahmeöffnung und dem ersten Beckenboden angeordnet ist.

Weiterhin betrifft die Erfindung ein Getriebe, insbesondere ein Kraftfahrzeuggetriebe, mit einem Getriebegehäuse, mit einem in dem Getriebegehäuse angeordneten Ölführungskanalteil mit den oben beschriebenen Merkmalen, und mit wenigstens einem in dem Getriebegehäuse angeordneten Getriebezahnrad, das wenigstens teilweise in einem Ölsumpf des Getriebes angeordnet ist, wobei das Ölführungskanalteil in einem vorbestimmten Einbauzustand, der eine Ausrichtung des Ölführungskanalteils in dem Getriebegehäuse relativ zur Schwerkraft definiert, in dem Getriebegehäuse derart angeordnet ist, dass die Aufnahmeöffnung an der Stirnseite des wenigstens teilweise in dem Ölsumpf angeordneten Getriebezahnrades positioniert ist, die Ölleitrichtung von der Aufnahmeöffnung bis zur Auslassöffnung zumindest eine entgegen der Schwerkraft verlaufende Komponente aufweist und zumindest der erste Beckenboden oberhalb des Getriebezahnrades angeordnet ist.

Im Kontext der vorliegenden Anmeldung ist unter einem "Öl" ein getriebetaugliches flüssiges Schmiermittel zu verstehen, unabhängig davon ob dieses im Handel als Öl vermarktet wird. Es kann sich beispielsweise um ein als ATF (Automatic Transmission Fluid) bezeichnetes Schmiermittel oder ähnliche Substanzen handeln. Vorzugsweise handelt es sich um MTF.

Unter einem vorbestimmten Einbauzustand, der eine Ausrichtung des Ölführungskanalteils in dem Getriebe relativ zur Schwerkraft definiert, wird ein Einbauzustand verstanden, welcher eine bestimmte Ausrichtung des Ölführungskanalteils relativ zu dem Getriebegehäuse bei bekannter Ausrichtung des zugehörigen Getriebes relativ zum Erdschwerfeld darstellt. Die Ausrichtung des Getriebes relativ zum Erdschwerfeld ist für eine Normallage des Getriebes in der Regel bekannt, wobei die Normallage diejenige Lage ist, in welcher das Getriebe im bestimmungsgemäßen Anwendungsfall relativ zur Schwerkraft ausgerichtet ist. Ist das Getriebe ein Kraftfahrzeuggetriebe, so nimmt das Getriebe eine bestimmte Ausrichtung zur Schwerkraft der Erde ein, wenn das Kraftfahrzeug in der Normallage relativ zum Erdschwerfeld waagerecht ausgerichtet ist. Dies gilt ganz unabhängig davon, ob das Kraftfahrzeug tatsächlich waagerecht zum Erdschwerfeld bewegt wird oder eine Steigung mit einem Neigungswinkel befährt. Aus einer vorbekannten Einbaulage des Getriebes im Kraftfahrzeug kann daher grundsätzlich abgeleitet werden, wie ein Ölführungskanalteil im Getriebe zu verbauen ist, damit das Ölführungskanalteil in der Normallage relativ zur Schwerkraft eine bestimmte Ausrichtung einnimmt.

Unter einer von der Aufnahmeöffnung bis zur Auslassöffnung entgegen der Schwerkraft verlaufenden Komponente der Ölleitrichtung wird verstanden, dass die Ölleitrichtung, in Bewegungskomponenten zerlegt, wenigstens eine entgegen der Schwerkraft gerichtete Komponente beziehungsweise Bewegungskomponente aufweist. Dazu muss nicht notwendig die gesamte Ölleitrichtung antiparallel zur Richtung der Schwerkraft verlaufen. Die Ölleitrichtung kann beispielsweise auch schräg zur Schwerkraft verlaufen oder entgegengesetzt parallel zur Schwerkraft verlaufen.

Unter einem Ölführungskanalteil wird ein Bauteil verstanden, welches wenigstens einen Leitkanal für den Öltransport aufweist. Das Ölführungskanalteil kann dazu ausgebildet sein, dem Ölführungskanalteil zugeführtes Öl unter dem Einfluss der Schwerkraft in dem Ölführungskanalteil zu verteilen. Das Ölführungskanalteil kann insbesondere als Einlegeteil ausgebildet sein, welches beim Zusammenbau des Getriebes in dieses eingesetzt wird. Das Ölführungskanalteil kann aus Kunststoff oder Metall oder einem Kunststoff-Metall-Verbund gefertigt werden. Das Ölführungskanalteil kann einteilig oder mehrteilig aufgebaut sein. Insbesondere ist es möglich, das Ölführungskanalteil aus zwei oder mehr Schalenteilen zusammenzusetzen, welche über Rastverbindungen oder Clipsverbindungen mechanisch miteinander verbunden werden.

Im Kontext der vorliegenden Anmeldung wird relativ zu einem angenommenen Bezugspunkt durch die Begriffe "unten" oder "unterhalb" eine Position an einem in Richtung der Schwerkraft gesehen tiefer gelegenen Punkt und durch die Begriffe "oben" oder "oberhalb" eine Position an einem in Richtung der Schwerkraft gesehen höher gelegenen Punkt bezeichnet, wobei eine Ausrichtung des Ölführungskanalteils angenommen wird, die dem vorbestimmten Einbauzustand entspricht.

Unter einem Ölsumpf des Getriebes wird ein Bereich innerhalb des Getriebegehäuses verstanden, in dem sich Öl unter dem Einfluss der Schwerkraft ansammelt. Unter einem Getriebezahnrad, das wenigstens teilweise in einem Ölsumpf des Getriebes angeordnet ist, wird ein Getriebezahnrad verstanden, dass mit einem in Richtung der Schwerkraft unteren Teil in den Ölsumpf eintaucht, während ein oberer Teil des Getriebezahnrades aus dem Ölsumpf herausragt. Bei einer Rotation des Getriebezahnrades nimmt dieses Öl aus dem Ölsumpf auf und transportiert es bis zu einem Ablösepunkt oder Abschlagpunkt entgegen der Schwerkraft. Dieser Vorgang wird als "Planschen" bezeichnet. Die Umwälzung und Förderleistung des Öls durch das Getriebezahnrad hängt dabei direkt von der Drehzahl und über die Viskosität auch von der Temperatur ab. Die einem Getriebezahnrad aus dem Ölsumpf abtransportierte Ölmenge lässt den Pegel des Ölsumpfs im Betrieb absinken. Das Getriebezahnrad kann daher als ein ölförderndes Getriebezahnrad angesehen werden. Von dem Getriebezahnrad und gegebenenfalls weiteren Getriebezahnrädern bei schneller Rotation im Getriebegehäuse verspritztes Öl kann dabei an Stellen gelangen, von denen aus kein rascher Rücklauf in den Ölsumpf erfolgt. Um sicherzustellen, dass dennoch genügend Öl von dem Getriebezahnrad gefördert wird und das Getriebe nicht trocken läuft, muss der Ölsumpf eine entsprechende Menge Öl aufweisen. Andererseits ist eine zu hohe Ölmenge im Ölsumpf nicht wünschenswert, da dies nachteilige Schleppverluste des Getriebes erhöht. Als Kompromiss ist es daher erstrebenswert, die durch das Getriebezahnrad abtransportierte Ölmenge möglichst gezielt den Schmierstellen im Getriebe zuzuführen, um Planschverluste zu vermeiden und den Pegel im Ölsumpf auf ein Niveau absenken zu können, bei dem Schleppverluste des Getriebes möglichst gering werden. Dies wird durch das Ölführungskanalteil erreicht.

### Vorteile der Erfindung

Das erfindungsgemäße Ölführungskanalteil ermöglicht eine gezieltere Ölversorgung von Lagern rotierender Getriebeelemente innerhalb eines Getriebegehäuses. Dies wird dadurch erreicht, dass der wenigstens eine Ölsammelbereich ein erstes Sammelbecken mit einer ersten Beckenwand und einem ersten Beckenboden und ein zweites Sammelbecken mit einer zweiten Beckenwand und einem zweiten Beckenboden aufweist, wobei der Leitkanal derart an die erste Beckenwand und die zweite Beckenwand angrenzt, dass in der Ölleitrichtung des Leitkanals gesehen der erste Beckenboden zwischen der Aufnahmeöffnung und der Auslassöffnung und der zweite Beckenboden zwischen der Aufnahmeöffnung und dem ersten Beckenboden angeordnet ist.

Da sich die Schmierstellen in einem Getriebe vertikal unterschiedlichen Stellen befinden, muss das Öl aus dem unten im Getriebegehäuse liegenden Ölsumpf bis zur Eingangswelle nach oben gefördert werden, wobei auch dazwischen Schmierstellen angeordnet sind. Hier wird durch einen zweistufigen Ölsammelbereich mit einem zweiten Sammelbecken, dessen zweiter Beckenboden zwischen der Aufnahmeöffnung und dem ersten Beckenboden angeordnet ist, vorteilhaft erreicht, dass das Öl leichter an Schmierstellen herangebracht werden kann, die sich relativ zur Schwerkraft auf unterschiedlichen vertikalen Ebenen befinden.

Das Ölführungskanalteil ist insbesondere vorteilhaft dazu ausgebildet, in einem vorbestimmten Einbauzustand, der eine Ausrichtung des Ölführungskanalteils relativ zur Schwerkraft definiert, in einem Getriebe verbaut zu werden, wobei in einer Ausrichtung, die dem vorbestimmten Einbauzustand entspricht, der erste Beckenboden und der zweite Beckenboden in etwa senkrecht zur Schwerkraft ausgerichtet sind und die Ölleitrichtung von der Aufnahmeöffnung und bis zur Auslassöffnung entgegen der Schwerkraft verläuft. Das erfindungsgemäße Ölführungskanalteil kann insbesondere derart in ein Getriebe eingebaut werden, dass in dem vorbestimmten Einbauzustand die Aufnahmeöffnung des Leitkanals an der Stirnseite eines Getriebezahnrades des Getriebes und der Beckenboden oberhalb des Getriebezahnrades positioniert werden kann. In dem Leitkanal durch die Aufnahmeöffnung aufgenommenes Öl kann bis zur Auslassöffnung entgegen der Schwerkraft transportiert werden, wobei aus der Auslassöffnung austretendes Öl sich in dem ersten Sammelbecken ansammeln kann.

Im Unterschied zu den aus dem Stand der Technik bekannten Lösungen, bei denen der Ölsammelbereich den Endbereich eines um eine Zahnradachse gekrümmten Halbbogen-Hohlkörpers bildet, umfasst bei der vorliegenden Erfindung der Ölsammelbereich ein erstes und zweites Sammelbecken Zumindest das erste Ölsammelbecken kann oberhalb des Öl fördernden Getriebezahnrades angeordnet werden. Das zweite Ölsammelbecken ist unterhalb des ersten Ölsammelbeckens angeordnet und kann in Richtung der Schwerkraft beispielsweise wenigstens teilweise unterhalb der Stirnwand des Ölfördernden Getriebezahnrades oder auch ganz oder teilweise darüber befinden. Der sich in dem ersten und zweiten Sammelbecken ansammelnde Vorrat an Öl lässt den Ölsumpf am Grund des Getriebegehäuses im Betrieb absinken. Der Leitkanal ist als einfacher, umfangsseitig geschlossener Kanal ausgebildet, der sich von der Aufnahmeöffnung bis zu einer Auslassöffnung vorzugsweise auf 80% seiner Längsertreckungsrichtung geradlinig erstrecken kann. Der Öffnungsquerschnitt der Aufnahmeöffnung kann dem Öffnungsquerschnitt der Auslassöffnung entsprechen. Der Leitkanal mit der umlaufenden Kanalwand stellt einen in das Ölführungskanalteil integrierten Leitkanal dar.

Im Unterschied zum Stand der Technik ist das Ölführungskanalteil so ausgelegt, dass sich das Öl nicht in dem Leitkanal ansammelt, sondern außerhalb des Leitkanals in dem ersten und dem zweiten Sammelbecken. Dadurch ist vorteilhaft, auch bei Drehzahlschwankungen eine ausreichende Schmierung der Getriebelager möglich, da im Betrieb zunächst der im ersten und zweiten Sammelbecken enthaltene Vorrat zur Versorgung der Schmierstellen genutzt werden kann. Wenigstens ein Ablauf, vorzugsweise jedoch mehrere Abläufe können an dem ersten und zweiten Sammelbecken vorhanden sein, um die Ölzuführung zu unterschiedlichen Lagern in dem Getriebe zu realisieren. Vorteilhaft kann im Vergleich zum Stand der Technik die Menge des im Betrieb durch den Leitkanal geförderten Öls unabhängiger von der aus dem Ölsammelbereich über einen Ablauf ablaufenden Ölmenge ausgestaltet werden. Der Leitkanal dient lediglich der Befüllung des ersten und zweiten Sammelbeckens, während der Abfluss von Öl aus dem ersten Sammelbecken und dem zweiten Sammelbecken über die geometrische Ausgestaltung der Sammelbecken und die geometrische Ausgestaltung der zugeordneten Abläufe eingestellt werden kann. Die Ölzuführung zu Lagerstellen der Getriebeelemente kann daher vorteilhaft sowohl örtlich wie auch in Hinblick auf den Zeitablauf optimiert werden. Insbesondere bei Getrieben, in denen rotierende Getriebeelemente in Bezug auf die Schwerkraft in mehreren Ebenen übereinander angeordnet sind, gelingt so eine verbesserte Schmierung der Lagerstellen.

Da das erste und das zweite Sammelbecken vorteilhaft als Zwischenspeicher genutzt werden kann, steht auch bei kurzen Deaktivierungszeiten einer das Getriebe antreibenden elektrischen Maschine eine schnellere Schmierung bei erneuter Aktivierung der elektrischen Maschine bereit. Bei längeren Standzeiten kann sich optional das erste Sammelbecken und/oder das zweite Sammelbecken über eine kleine Ablauföffnung im jeweiligen Beckenboden auch vollständig in Richtung Ölsumpf entleeren. Die Ablauföffnungen sind aber keineswegs zwingend erforderlich.

Vorteilhafte Ausführungsformen und Weiterbildungen der Erfindung werden durch die in den abhängigen Ansprüchen angegebenen Merkmale ermöglicht.

Vorteilhaft kann ein von der Aufnahmeöffnung abgewandtes Ende der Kanalwand des Leitkanals eine über den ersten Beckenboden des ersten Sammelbeckens vorstehende und die Auslassöffnung begrenzende Wandung ausbilden. Über diese Wandung ablaufendes Öl kann somit vorteilhaft direkt in das erste Sammelbecken ablaufen und dieses befüllen.

Vorteilhaft kann der Leitkanal von der Aufnahmeöffnung bis zur Auslassöffnung durchgängig geschlossen und auf wenigstens 80% seiner Längserstreckung geradlinig ausgebildet sein. Dies ermöglicht einen möglichst ungehinderten Transport des dem Leitkanal zugeführten Öls in Richtung Auslassöffnung. Der geradlinige Leitkanal kann in einem Getriebe insbesondere so ausgerichtet werden, dass er mit einem Abschnitt in dem vorbestimmten Einbauzustand tangential zu einer Stirnseite eines Getriebezahnrades verläuft. Die Aufnahmeöffnung des Leitkanals kann beispielsweise als Fangmaul ausgebildet sein, wobei der umlaufende Rand der Aufnahmeöffnung entsprechend dem Tangentialwinkel des Leitkanals abgeschrägt ausgebildet werden kann, so dass eine möglichst starke Annäherung der Aufnahmeöffnung an die Stirnseite des Getriebezahnrades erreicht werden kann. Die Kontur des umlaufenden Randes kann dabei an den Krümmungsradius der Stirnseite eines Getriebezahnrades angepasst sein. In einer Ausrichtung des Ölführungskanalteils, welche dem vorbestimmten Einbauzustand entspricht, läuft aus der Auslassöffnung des Leitkanals austretendes Öl in Richtung der Schwerkraft ab und sammelt sich in dem ersten Sammelbecken, welches dadurch befüllt wird.

Das zweite Sammelbecken kann in einfacher Weise durch über einen ersten Damm aus dem ersten Sammelbecken ablaufendes Öl befüllt werden. Dadurch füllt sich zunächst das erste Sammelbecken bis auf die Höhe des ersten Dammes. Sobald diese erreicht ist, läuft Öl in oder an dem Ölführungskanalsteil über den ersten Damm in Richtung des zweiten Sammelbeckens ab.

Vorteilhaft weist das erste Sammelbecken wenigstens einen ersten Ablauf auf und das zweite Sammelbecken wenigstens einem zweiten Ablauf auf, wobei Öl aus dem zweiten Sammelbecken insbesondere über einen zweiten Damm zu dem zweiten Ablauf gelangt. Der wenigstens eine erste Ablauf und der wenigstens eine zweite Ablauf können unterschiedliche Lager auf unterschiedlichen vertikalen Ebenen in einem Getriebe mit Schmieröl versorgen. Die Ölzufuhr zu den Lagern erfolgt dabei vorteilhaft "passiv", also durch Ablaufen des Öls über die jeweils zugeordneten Abläufe.

Weiterhin kann das erste Sammelbecken mit einer von dem ersten Beckenboden aufragenden Trennwand versehen sein, welche das erste Sammelbecken in wenigstens zwei Teilbereiche unterteilt, wobei sich die Auslassöffnung zu einem ersten Teilbereich hin öffnet und der zweite Teilbereich über einen Durchstich in der Trennwand mit dem ersten Teilbereich verbunden ist. Die Trennwand wird beim befüllten des ersten Sammelbeckens überspült, so dass Öl in beide Teilbereiche gelangt. Von dem zweiten Teilbereich wird das Öl erst über den Durchstich in Richtung des ersten Teilbereichs abgeleitet. Dabei kann die Trennwand insbesondere als Schwallbrecher ausgebildet sein und einen der Auslassöffnung zugewandten Kiel aufweist, von dem aus sich in gegenläufige Richtungen nach hinten abgebogene Teilwände zu einem ersten Ablauf und einem dritten Ablauf hin erstrecken. Öl, welches aus der Auslassöffnung des Leitkanals austritt, trifft auf den Kiel und wird in zwei Teilströme aufgespalten, welche in Richtung voneinander abgewandter Abläufe strömen.

Besonders vorteilhaft ist das erfindungsgemäße Ölführungskanalteil in Kombination mit einem Getriebe einsetzbar, wobei das Ölführungskanalteil in einem Getriebegehäuse des Getriebes einsetzbar ist. Das Getriebe weist wenigstens ein in dem Getriebegehäuse angeordnetes Getriebezahnrad auf, das wenigstens teilweise in einem Ölsumpf des Getriebes angeordnet ist. Das Ölführungskanalteil ist in einem vorbestimmten Einbauzustand, der eine Ausrichtung des Ölführungskanalteils in dem Getriebegehäuse relativ zur Schwerkraft definiert, in dem Getriebegehäuse derart angeordnet, dass die Aufnahmeöffnung an der Stirnseite des wenigstens teilweise in dem Ölsumpf angeordneten Getriebezahnrades positioniert ist, die Ölleitrichtung von der Aufnahmeöffnung bis zur Auslassöffnung wenigstens eine entgegen der Schwerkraft verlaufende Komponente aufweist und zumindest der erste Beckenboden oberhalb des Getriebezahnrades angeordnet ist.

Im Betrieb durch das Getriebezahnrad aus dem Ölsumpf aufgeworfenes Öl gelangt vorteilhaft in die Aufnahmeöffnung und entlang der Ölleitrichtung des Leitkanals zur Auslassöffnung gelangt.

Vorteilhaft ist das erste Sammelbecken mit wenigstens einem ersten Ablauf versehen ist und das zweite Sammelbecken mit wenigstens einem zweiten Ablauf versehen ist, wobei eine Ablauföffnung des ersten Ablaufs ein Lager eines ersten Getriebeelementes, insbesondere das Lager einer in dem Getriebe gelagerten, eingangsseitigen Rotorwelle, mit Öl versorgt und eine Ablauföffnung des zweiten Ablaufs ein Lager eines zweiten Getriebeelementes, insbesondere ein Lager eines Ritzels, mit Öl versorgt. Über den ersten Ablauf und den zweiten Ablauf und gegebenenfalls weitere Abläufe können unterschiedliche Lager von Getriebeelementen des Getriebes mit Öl versorgt werden.

### Kurze Beschreibung der Zeichnungen

Nachfolgend werden mögliche Ausführungsformen der Erfindung unter Bezugnahme auf die beiliegende Zeichnung erläutert. In der Zeichnung zeigen:
- Fig. 1: einen Querschnitt durch ein Getriebe eines Kraftfahrzeuges, welches von einer nicht dargestellten elektrischen Maschine angetrieben wird, und in dem das Ölführungskanalteil eingesetzt werden kann,
- Fig. 2: eine perspektivische Ansicht eines Ausführungsbeispiels eines erfindungsgemäßen Ölführungskanalteils zum Einsatz in einem Getriebe,
- Fig. 3: einen Querschnitt durch ein Getriebe mit Getriebegehäuse, welches dem Aufbau in der Darstellung der Fig. 1 entspricht, mit einem darin in einem vorbestimmten Einbauzustand eingesetzten Ölführungskanalteil, wie es in der Figur 2 dargestellt wurde.

### Ausführungsformen der Erfindung

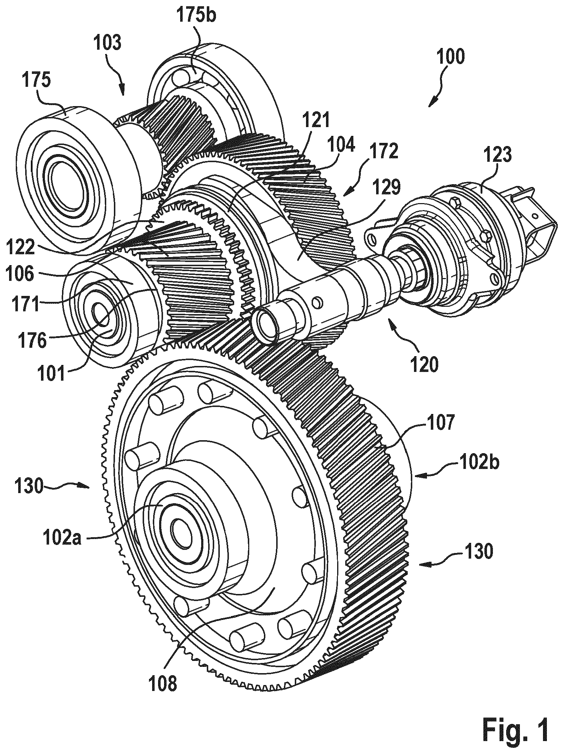

Fig. 1 zeigt eine Antriebsvorrichtung für ein Kraftfahrzeug, die ein Getriebe 100 umfasst. Die Beschreibung des Getriebes dient der Erläuterung der Einsatzmöglichkeiten eines Ölführungskanalteils, wie es weiter unten noch beschrieben wird.

Das Getriebe 100 ist eingangsseitig mit einer nicht dargestellten elektrischen Maschine verbunden, die eine Rotorwelle 103 aufweist. Die Rotorwelle 103 ist in zwei Lagern 175, 175b gelagert und kämmt mit einem Zahnrad 104, das drehfest mit einer Antriebswelle 101 beziehungsweise Zwischenwelle des Getriebes gekoppelt ist. Die Antriebswelle 101 ist über ihren Außenumfang an zwei axial beabstandeten Lagerstellen 171 und 172 in einem (in Fig. 1 nicht dargestellten) Getriebegehäuse drehbar gelagert.

Weiterhin umfasst das Getriebe 100 eine Kupplungseinrichtung 120, die beispielsweise mittels eine vorzugsweise elektrisch betätigbaren Drehstellers 123 ansteuerbar ist. Der elektrische Aktuator 123 kann beispielsweise über einen Spindelantrieb und eine Schaltgabel 129 auf ein Kupplungselement 121 einwirken, das axial verschiebbar auf einer in Fig. 1 nicht erkennbaren Führungsnabe gelagert ist. Das Kupplungselement 121 ist beispielsweise ringförmig ausgebildet und kann sich relativ zur Schaltgabel 129 drehen. Das Kupplungselement 121 kann eine Innenverzahnung aufweisen, die in eine Außenverzahnung der Führungsnabe eingreift, so dass das Kupplungselement 121 auf der Führungsnaheparallel zur Achse der Antriebswelle 101 verschiebbar ist. Die Führungsnabe und das damit in Eingriff stehende Kupplungselement 121 ist drehfest auf der Antriebswelle 101 gelagert. Weiterhin ist ein Koppelelement 122 vorgesehen, das drehfest mit einem Ritzel 106 gekoppelt ist. Das Ritzel 106 ist beispielsweise mit einem als Nagellager ausgebildeten Lager 176 auf der Antriebswelle 101 drehbar gelagert. Das Koppelelement 122 kann eine Außenverzahnung aufweisen. Bei einer Betätigung des Drehstellers 123 verschiebt der Spindelantrieb über die Schaltgabel das Kupplungselement 121 in der axialen Richtung, bis die Innenverzahnung des Kupplungselementes 121 in die Außenverzahnung des Koppelelementes 122 eingreift, wodurch das Kupplungselement 121 drehfest mit dem Koppelelement 122 gekoppelt wird. Durch die Kopplung rotiert das Zahnrad 104, die Antriebswelle 101, die Führungsnabe, das Kupplungselement 121, das Koppelelement 122 und das Ritzel 106 als Block um die Achse der Antriebswelle 101. Bei einer Entkopplung wird mittels des Drehstellers 123 das Kupplungselement 121 von dem Koppelelement 122 in Fig. 1 nach rechts abgezogen, wodurch die Kopplung zwischen dem Ritzel 106 und der Antriebswelle 101 aufgehoben wird. Das Ritzel 106 kann nun um die Antriebswelle 101 rotieren.

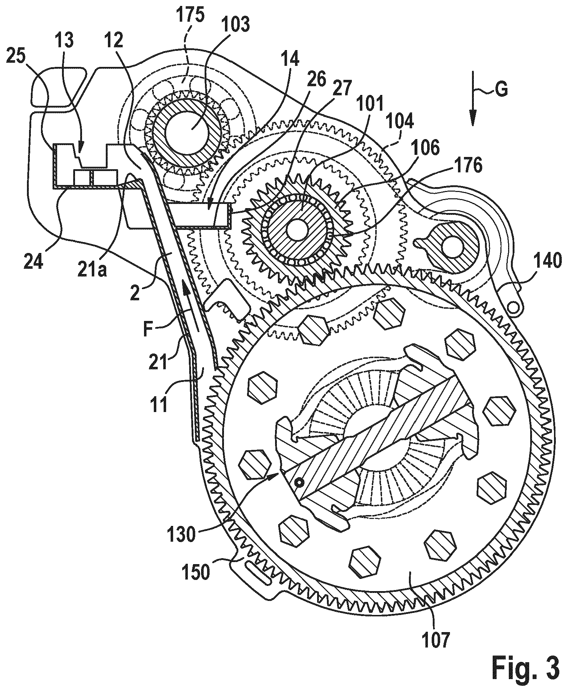

Das Ritzel 106 kämmt mit einem Getriebezahnrad 107. Das Getriebezahnrad 107 ist drehfest mit einem Differential 130 gekoppelt. Das Differential 130 weist eine Abtriebswelle 102 in Form einer ersten Abtriebswelle 102a und einer zweiten Abtriebswelle 102b auf, die mit dem Differential 130 drehend angetrieben werden können. Das Getriebezahnrad 107 ist mit dem Differentialkäfig 108 des Differentials 130 fest verbunden. Wie in Fig. 3 dargestellt ist, kann das Differential 130 in das Getriebegehäuse 140 des Getriebes 100 integriert sein.

Wie bereits beschrieben, wird in dem entkoppelten Zustand mittels der Kupplungseinrichtung 120 die Kopplung zwischen dem Ritzel 106 und der Antriebswelle 101 aufgehoben. Wird nun beispielsweise in einem Fahrzustand eines Kraftfahrzeuges zusätzlich die elektrische Maschine abgeschaltet, so wird die Rotorwelle 103 und die Antriebswelle 101 nicht mehr angetrieben. Die Räder des noch rollenden Kraftfahrzeugs treiben nun über die Ausgangswelle 102 das Getriebezahnrad 107 an, welche mit dem Ritzel 106 kämmt, so dass das Ritzel 106 um die Antriebswelle 101 rotiert. Auch in diesem Zustand muss gewährleistet sein, dass beispielsweise das über dem Ölsumpf des Getriebes 100 angeordnete Lager 176 des Ritzels 106 ausreichend mit Öl versorgt wird.

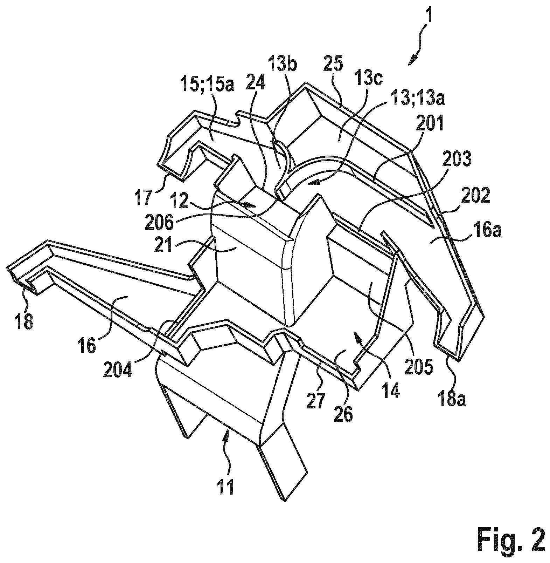

Fig. 2 zeigt ein Ausführungsbeispiel eines erfindungsgemäßen Ölführungskanalteils 1, das beispielsweise dazu bestimmt sein kann in dem anhand der Fig. 1 dargestellten Getriebe 100 verbaut zu werden. Das Ölführungskanalteil 1 kann, wie hier gezeigt, als Einlegeteil ausgebildet sein, welches beim Zusammenbau des Getriebes 100 in das Getriebe 100 eingesetzt wird. Das Ölführungskanalteil 1 kann aus Kunststoff oder Metall oder einem Kunststoff-Metall-Verbund gefertigt werden und einteilig oder mehrteilig aufgebaut sein. Insbesondere ist es möglich, das Ölführungskanalteil aus zwei oder mehr Schalenteilen zusammenzusetzen, welche über Rastverbindungen oder Clipsverbindungen mechanisch miteinander verbunden werden.

Das Ölführungskanalteil 1 weist einen (in Fig. 3 besser erkennbaren) Leitkanal 2 mit einer Aufnahmeöffnung 11 und mit einer Auslassöffnung 12 auf, wobei der Leitkanal 2 von der Aufnahmeöffnung 11 bis zur Auslassöffnung 12 eine Ölleitrichtung F (dargestellt in Fig. 3) und eine senkrecht zur Ölleitrichtung F umlaufend geschlossene Kanalwand 21 aufweist. Das Ölführungskanalteil 1 weist weiterhin einen Ölsammelbereich 13a zur Ansammlung von durch den Leitkanal 2 gefördertem Öl und einen Ablauf 15a für Öl aus dem Ölsammelbereich 13a auf.

Wie in Fig. 2 dargestellt ist, umfasst der Ölsammelbereich 13a ein erstes Sammelbecken 13 am oberen Ende des Ölführungskanalteils 1. Das erste Sammelbecken 13 weist eine erste Beckenwand 25 und einen ersten Beckenboden 24 auf. Wie am besten in Fig. 3 zu erkennen ist, bildet ein von der Aufnahmeöffnung 11 des Leitkanals 2 abgewandtes Ende der Kanalwand 21 eine über den ersten Beckenboden 24 des ersten Sammelbeckens 13 vorstehende und die Auslassöffnung 12 begrenzende Wandung 21a.

Wie in Fig. 2 weiterhin erkennbar ist, ist das erste Sammelbecken 13 mit einer von dem ersten Beckenboden 24 aufragenden Trennwand 201 versehen, deren Höhe geringer als die Höhe der Beckenwand 25 ausgebildet ist. Die Trennwand 201 unterteilt das erste Sammelbecken 13 in wenigstens zwei Teilbereiche, wobei sich die Auslassöffnung 12 zu einem ersten Teilbereich 13b hin öffnet. Der zweite Teilbereich 13c ist über einen schmalen Durchstich 202 in der Trennwand 201 mit dem ersten Teilbereich 13b verbunden. Wie in Fig. 2 weiterhin erkennbar ist, kann die Trennwand 201 als Schwallbrecher mit einem der Auslassöffnung 12 zugewandten Kiel 206 ausgebildet sein. Von dem Kiel 206 aus erstrecken sich in gegenläufige Richtungen nach hinten abgebogene Teilwände zu einem ersten Ablauf 15 und einem dritten Ablauf 16a des ersten Sammelbeckens 13. Öl, das aus der Auslassöffnung 12 austritt, läuft über die Wandung 21 in das erste Sammelbecken 13 ab und trifft dort auf den Kiel 206. Dabei kann die Trennwand 201 teilweise überflutet werden, so dass sich das Öl in dem ersten Teilbereich 13b und dem zweiten Teilbereich 13a ansammelt. Von dort aus läuft das Öl über den ersten Ablauf 15 in Richtung der Ablauföffnung 17 und über den dritten Ablauf 16a in Richtung der Ablauföffnung 18a ab. Der erste Ablauf 15 und der zweite Ablauf 16 kann als abgewinkelte Rinne ausgebildet sein.

Wie weiterhin in Fig. 2 erkennbar ist, umfasst der Ölsammelbereich des Ölführungskanalteils 1 ein zweites Sammelbecken 14, wobei das zweite Sammelbecken 14 eine zweite Beckenwand 27 und einen zweiten Beckenboden 26 aufweist. Das zweite Sammelbecken 14 ist zwischen der Aufnahmeöffnung 11 des Leitkanals und dem ersten Beckenboden 24 des ersten Sammelbeckens 13 angeordnet. An seiner dem zweiten Sammelbecken 14 zugewandten Seite ist die Beckenwand 25 des ersten Sammelbeckens 13 durch einen ersten Damm 203 unterbrochen. Die Höhe des ersten Damms 203 ist deutlich geringer als die Höhe der Beckenwand 25 ausgebildet. Öl, welches das erste Sammelbecken 13 füllt, läuft bei ausreichender Füllhöhe teilweise über den Damm 203 in Richtung des zweiten Sammelbeckens 14 ab. Auch die Beckenwand 27 des zweiten Sammelbeckens 14 kann an einer Stelle durch einen zweiten Damm 204 unterbrochen werden, dessen Höhe geringer ausgebildet ist als die Höhe der zweiten Beckenwand 27. Ist das zweite Sammelbecken 14 ausreichend befüllt, so gelangt das Öl über den zweiten Damm 204 zu einem als abgewinkelte Rinne ausgebildeten zweiten Ablauf 16, der eine weitere Ablauföffnung 18 aufweist.

Das in der Figur 2 dargestellte Ölführungskanalteil 1 ist dazu ausgelegt, in einem vorbestimmten Einbauzustand, der eine Ausrichtung des Ölführungskanalteils relativ zur Schwerkraft G definiert, in dem Getriebegehäuse 140 eines Getriebes angeordnet zu werden. Ohne darauf beschränkt zu sein, ist das Ölführungskanalteil 1 vorzugsweise dazu bestimmt, in das in der Fig. 1 dargestellte Getriebe 100 eingesetzt zu werden. Dazu kann das Ölführungskanalteil 1 mit entsprechenden Vorsprüngen und Haltenocken versehen sein, mit denen das Ölführungskanalteil 1 in einem Getriebegehäuse 140 des Getriebes 100 in einer vorbestimmten Ausrichtung relativ zur Normallage des Getriebes 100 verbaut und verankert werden kann.

Fig. 3 zeigt ein Getriebe 100, dessen grundsätzlicher Aufbau dem in der Fig. 1 dargestellten Getriebe entspricht, mit dem darin verbauten Ölführungskanalteil 1 aus Fig. 2. Es ist zu erkennen, dass die Aufnahmeöffnung 11 des Leitkanals 2 an der Stirnseite des Getriebezahnrades 107 und in unmittelbarer Nähe zur der Stirnseite des Getriebezahnrades 107 positioniert werden kann, während der Beckenboden 24 des ersten Sammelbeckens 13 und in dieser Ausführungsform beispielsweise auch der Beckenboden 26 des zweiten Sammelbeckens 14 oberhalb des Getriebezahnrades 107 angeordnet sein können. Die Ölleitrichtung F weist eine von der Aufnahmeöffnung 11 bis zur Auslassöffnung 12 entgegen der Schwerkraft G verlaufende Komponenten auf. Die Ausrichtung der Schwerkraft G ist für die Normallage des Getriebes 100 in Fig. 3 dargestellt. Es ist zu erkennen, dass die Ölleitrichtung F etwa schräg zur Schwerkraft verläuft und eine relativ große Komponente aufweist, welche der Schwerkraft direkt gegengesetzt ist. In der Ölleitrichtung F des Leitkanals 2 gesehen, ist der erste Beckenboden 24 zwischen der Aufnahmeöffnung 11 und der Auslassöffnung 12 und der zweite Beckenboden 26 zwischen der Aufnahmeöffnung 11 und dem ersten Beckenboden 24 angeordnet.

Der Leitkanal 2 ist vorzugsweise auf 80% seiner Längserstreckung geradlinig ausgebildet und verläuft zumindest im Bereich des Getriebezahnrades 107 vorzugsweise tangential zu einer Stirnseite des Getriebezahnrades 107. Die Aufnahmeöffnung 11 kann als Fangmaul ausgebildet sein, wobei der umlaufende Rand der Aufnahmeöffnung 11 entsprechend dem durch die Richtung von Schwerkraft und Förderrichtung F gebildeten Winkel abgeschrägt ausgestaltet sein kann, so dass eine möglichst starke Annäherung der Aufnahmeöffnung 11 an die Stirnseite des Getriebezahnrades 107 erreicht werden kann. Die Kontur des umlaufenden Randes kann dabei wie dargestellt an den Krümmungsradius der Stirnseite des Getriebezahnrades 107 angepasst sein.

Das Getriebezahnrad 107 des Getriebes 100 ist teilweise in einem Ölsumpf 150 angeordnet. Das Getriebezahnrad 107 nimmt Öl aus dem Ölsumpf 150 auf und transportiert dieses in die Aufnahmeöffnung 11 des Leitkanals 2. Der Bewegungsimpuls des Öls drückt dieses in dem Leitkanal 2 in der Ölleitrichtung F bis zur Auslassöffnung 12.

Das über den ersten Ablauf 15, den zweiten Ablauf 18 und den dritten Ablauf 18a aus dem Ölführungskanalteil 1 ablaufende Öl kann in dem Getriebe 100 an unterschiedliche Lager von Getriebeelementen herangeführt werden, die räumlich voneinander entfernt sein können. Beispielsweise kann der erste Ablauf 15 über die Ablauföffnung 17 und der dritte Ablauf 16a über die Ablauföffnung 18a ein erstes und/oder zweites Lager eines Getriebeelementes, insbesondere das Lager 175 und das Lager 175b der in dem Getriebe 100 gelagerten eingangsseitigen Rotorwelle 103 mit Öl versorgt.

Die Ablauföffnung 18 des zweiten Ablaufs 16 kann in einer anderen Ebene, welche zwischen der Aufnahmeöffnung 11 und der Auslassöffnung 12 angeordnet ist, ein Lager eines weiteren Getriebeelementes, insbesondere das Lager 176 des Ritzels 106 mit Öl versorgen.

Es versteht sich, dass mittels des ersten Sammelbeckens und des zweiten Sammelbeckens und der davon abzweigenden Abläufe eine optimale Zuführung von Schmieröl an die Lager rotierender Getriebeelemente auch für andersartig aufgebaute Getriebe optimal angepasst werden kann.

## Patentansprüche

1. Ölführungskanalteil (1) für den Einbau in ein Getriebe (100), insbesondere für den Einbau in ein Kraftfahrzeuggetriebe, wobei das Ölführungskanalteil (1) einen Leitkanal (2) mit einer Aufnahmeöffnung (11) und mit einer Auslassöffnung (12) aufweist, wobei der Leitkanal (2) von der Aufnahmeöffnung (11) bis zur Auslassöffnung (12) eine Ölleitrichtung (F) und eine senkrecht zur Ölleitrichtung (F) umlaufend geschlossene Kanalwand (21) aufweist, wobei das Ölführungskanalteil (1) weiterhin wenigstens einen Ölsammelbereich (13a) zur Ansammlung von durch den Leitkanal (2) geleitetem Öl aufweist, wobei das Ölführungskanalteil (1) wenigstens einen Ablauf (15a) für Öl aus dem wenigstens einen Ölsammelbereich (13a) aufweist, wobei der wenigstens eine Ölsammelbereich (13a) ein erstes Sammelbecken (13) mit einer ersten Beckenwand (25) und einem ersten Beckenboden (24) umfasst, **dadurch gekennzeichnet, dass** der wenigstens eine Ölsammelbereich (13a) ein zweites Sammelbecken (14) mit einer zweiten Beckenwand (27) und einem zweiten Beckenboden (26) umfasst, wobei der Leitkanal (2) derart an die erste Beckenwand (25) und die zweite Beckenwand (27) angrenzt, dass in der Ölleitrichtung (F) des Leitkanals (2) gesehen der erste Beckenboden (24) zwischen der Aufnahmeöffnung (11) und der Auslassöffnung (12) und der zweite Beckenboden (26) zwischen der Aufnahmeöffnung (11) und dem ersten Beckenboden (24) angeordnet ist.

2. Ölführungskanalteil (1) nach Anspruch 1, **dadurch gekennzeichnet, dass** das Ölführungskanalteil (1) dazu ausgebildet ist, in einem vorbestimmten Einbauzustand, der eine Ausrichtung des Ölführungskanalteils (1) relativ zur Schwerkraft (G) definiert, in einem Getriebe (100) verbaut zu werden, wobei in einer Ausrichtung die dem vorbestimmten Einbauzustand entspricht, der erste Beckenboden (24) und der zweite Beckenboden (26) in etwa senkrecht zur Schwerkraft (G) ausgerichtet sind und die Ölleitrichtung (F) von der Aufnahmeöffnung (11) und bis zur Auslassöffnung (12) zumindest eine entgegen der Schwerkraft (G) verlaufende Komponente aufweist.

3. Ölführungskanalteil (1) nach Anspruch 1 oder 2, **dadurch gekennzeichnet, dass** ein von der Aufnahmeöffnung (11) abgewandtes Ende der Kanalwand (21) des Leitkanals (2) eine über den ersten Beckenboden (24) des ersten Sammelbeckens (13) vorstehende und die Auslassöffnung (12) begrenzende Wandung (21a) ausbildet.

4. Ölführungskanalteil (1) nach einem der vorstehenden Ansprüche, **dadurch gekennzeichnet, dass** der Leitkanal (2) von der Aufnahmeöffnung (11) bis zur Auslassöffnung (12) durchgängig geschlossen und auf wenigstens 80% seiner Längserstreckung geradlinig ausgebildet ist.

5. Ölführungskanalteil (1) nach einem der vorstehenden Ansprüche, **dadurch gekennzeichnet, dass** das zweite Sammelbecken (14) durch über einen ersten Damm (203) aus dem ersten Sammelbecken (13) ablaufendes Öl befüllbar ist.

6. Ölführungskanalteil nach einem der vorstehenden Ansprüche, **dadurch gekennzeichnet, dass** das erste Sammelbecken (13) mit wenigstens einem ersten Ablauf (15) versehen ist.

7. Ölführungskanalteil nach einem der vorstehenden Ansprüche, **dadurch gekennzeichnet, dass** das zweite Sammelbecken (14) mit wenigstens einem zweiten Ablauf (16) versehen ist, wobei Öl aus dem zweiten Sammelbecken (14) insbesondere über einen zweiten Damm (204) zu dem zweiten Ablauf (16) gelangt.

8. Ölführungskanalteil nach einem der vorstehenden Ansprüche, **dadurch gekennzeichnet, dass** wenigstens das erste Sammelbecken (13) mit einer von dem ersten Beckenboden (24) aufragenden Trennwand (201) versehen ist, welche das erste Sammelbecken (13) in wenigstens zwei Teilbereiche unterteilt, wobei sich die Auslassöffnung (12) zu einem ersten Teilbereich (13b) hin öffnet und der zweite Teilbereich (13c) über einen Durchstich (202) in der Trennwand (201) mit dem ersten Teilbereich (13b) verbunden ist.

9. Ölführungskanalteil nach Anspruch 8, **dadurch gekennzeichnet, dass** die Trennwand (201) als Schwallbrecher ausgebildet ist, wobei die Trennwand einen der Auslassöffnung (12) zugewandten Kiel (206) aufweist, von dem aus sich in gegenläufige Richtungen nach hinten abgebogene Teilwände zu einem ersten Ablauf (15) und einem dritten Ablauf (16a) hin erstrecken.

10. Ölführungskanalteil (1) nach einem der vorstehenden Ansprüche, **dadurch gekennzeichnet, dass** das Ölführungskanalteil (1) als Einlegeteil ausgebildet ist.

11. Getriebe (100), insbesondere Kraftfahrzeuggetriebe, mit einem Getriebegehäuse (140), mit einem in dem Getriebegehäuse (100) angeordneten Ölführungskanalteil (1) nach einem der Ansprüche 1 bis 10, und mit wenigstens einem in dem Getriebegehäuse (140) angeordneten Getriebezahnrad (107), das wenigstens teilweise in einem Ölsumpf (150) des Getriebes (100) angeordnet ist, wobei das Ölführungskanalteil (1) in einem vorbestimmten Einbauzustand, der eine Ausrichtung des Ölführungskanalteils (1) in dem Getriebegehäuse (140) relativ zur Schwerkraft (G) definiert, in dem Getriebegehäuse (140) derart angeordnet ist, dass die Aufnahmeöffnung (11) an der Stirnseite des wenigstens teilweise in dem Ölsumpf (150) angeordneten Getriebezahnrades (107) positioniert ist, die Ölleitrichtung (F) von der Aufnahmeöffnung (11) bis zur Auslassöffnung (12) zumindest eine entgegen der Schwerkraft (G) verlaufende Komponente aufweist und zumindest der erste Beckenboden (24) oberhalb des Getriebezahnrades (107) angeordnet ist.

12. Getriebe (100) nach Anspruch 11, **dadurch gekennzeichnet, dass** im Betrieb durch das Getriebezahnrad (107) aus dem Ölsumpf (150) aufgeworfenes Öl in die Aufnahmeöffnung (11) und entlang der Ölleitrichtung (F) des Leitkanals (2) zur Auslassöffnung (12) gelangt.

13. Getriebe nach Anspruch 11 oder 12, **dadurch gekennzeichnet, dass** das erste Sammelbecken (13) mit wenigstens einem ersten Ablauf (15) versehen ist und das zweite Sammelbecken (14) mit wenigstens einem zweiten Ablauf (16) versehen ist, wobei eine Ablauföffnung (17) des ersten Ablaufs (15) ein Lager eines ersten Getriebeelementes, insbesondere das Lager (175) einer in dem Getriebe (100) gelagerten, eingangsseitigen Rotorwelle (102) mit Öl versorgt und eine Ablauföffnung (18) des zweiten Ablaufs (16) ein Lager eines zweiten Getriebeelementes, insbesondere ein Lager (176) eines Ritzels (106) mit Öl versorgt.

## Claims

1. Oil duct part (1) for installation in a gearbox (100), in particular for installation in a motor vehicle gearbox, wherein the oil duct part (1) has a duct (2) with a receiving opening (11) and an outlet opening (12), wherein the duct (2) from the receiving opening (11) to the outlet opening (12) has an oil guiding direction (F) and a duct wall (21) which is circumferentially closed perpendicularly to the oil guiding direction (F), wherein the oil duct part (1) furthermore has at least one oil collection region (13a) for the accumulation of oil directed through the duct (2), wherein the oil duct part (1) has at least one drain (15a) for oil from the at least one oil collection region (13a), wherein the at least one oil collection region (13a) comprises a first collection reservoir (13) with a first reservoir wall (25) and a first reservoir base (24), **characterized in that** the at least one oil collection region (13a) comprises a second collection reservoir (14) with a second reservoir wall (27) and a second reservoir base (26), wherein the duct (2) is contiguous to the first reservoir wall (25) and the second reservoir wall (27) in such a manner that, when viewed in the oil guiding direction (F) of the duct (2), the first reservoir base (24) is disposed between the receiving opening (11) and the outlet opening (12), and the second reservoir base (26) is disposed between the receiving opening (11) and the first reservoir base (24).

2. Oil duct part (1) according to Claim 1, **characterized in that** the oil duct part (1) is designed to be installed in a gearbox (100) in a predetermined installation state which defines an orientation of the oil duct part (1) relative to gravity (G), wherein in an orientation which corresponds to the predetermined installation state, the first reservoir base (24) and the second reservoir base (26) are aligned approximately perpendicularly to gravity (G) and the oil guiding direction (F) from the receiving opening (11) and up to the outlet opening (12) has at least one component running counter to gravity (G).

3. Oil duct part (1) according to Claim 1 or 2, **characterized in that** an end of the duct wall (21) of the duct (2) facing away from the receiving opening (21) forms a wall (24a) projecting beyond the first reservoir base (11) of the first collection reservoir (13) and delimiting the outlet opening (12).

4. Oil duct part (1) according to one of the preceding claims, **characterized in that** the duct (2) is continuously closed from the receiving opening (11) to the outlet opening (12) and is formed to be rectilinear on at least 80% of its longitudinal extent.

5. Oil duct part (1) according to one of the preceding claims, **characterized in that** the second collection reservoir (14) can be filled by an oil draining from the first collection reservoir (13) via a first dam (203).

6. Oil duct part according to one of the preceding claims, **characterized in that** the first collection reservoir (13) is provided with at least one first drain (15).

7. Oil duct part according to one of the preceding claims, **characterized in that** the second collection reservoir (14) is provided with at least one second drain (16), wherein oil from the second collection reservoir (14) reaches the second drain (16) in particular via a second dam (204).

8. Oil duct part according to any one of the preceding claims, **characterized in that** at least the first collection reservoir (13) is provided with a partition wall (201) which protrudes from the first reservoir base (24) and divides the first collection reservoir (13) into at least two sub-regions, wherein the outlet opening (12) opens towards a first sub-region (13b) and the second sub-region (13c) is connected to the first sub-region (13b) via a through opening (202) in the partition wall (201).

9. Oil duct part according to Claim 8, **characterized in that** the partition wall (201) is designed as a surge breaker, wherein the partition wall has a keel (206) which faces the outlet opening (12), from which sub-walls that are bent backwards in opposite directions extend to a first drain (15) and a third drain (16a).

10. Oil duct part (1) according to one of the preceding claims, **characterized in that** the oil duct part (1) is designed as an insert part.

11. Gearbox (100), in particular motor vehicle gearbox, having a gearbox housing (140), having an oil duct part (1) according to one of Claims 1 to 10 disposed in the gearbox housing (100), and having at least one gearwheel (107) which is disposed in the gearbox housing (140) and is at least partially disposed in an oil sump (150) of the gearbox (100), wherein the oil duct part (1) in a predetermined installation state in the gearbox (140) which defines an orientation of the oil duct part (1) relative to gravity (G), is disposed in the gearbox housing (140) in such a manner that the receiving opening (11) is positioned on the end face of the gearwheel (107) disposed at least partially in the oil sump (150), the oil guiding direction (F) from the receiving opening (11) to the outlet opening (12) has at least one component running counter to gravity (G), and at least the first reservoir base (24) is disposed above the gearwheel (107).

12. Gearbox (100) according to Claim 11, **characterized in that** oil discharged by the gearwheel (107) from the oil sump (150) during operation makes its way into the receiving opening (11) and along the oil guiding direction (F) of the duct (2) to the outlet opening (12).

13. Gearbox according to Claim 11 or 12, **characterized in that** the first collection reservoir (13) is provided with at least one first drain (15) and the second collection reservoir (14) is provided with at least one second drain (16), wherein a drain opening (17) of the first drain (15) supplies a bearing of a first gearbox element, in particular the bearing (175) of an input-proximal rotor shaft (102) mounted in the gearbox (100) with oil, and a drain opening (18) of the second drain (16) supplies a bearing of a second gearbox element, in particular a bearing (176) of a pinion (106), with oil.

## Revendications

1. Pièce de conduit d'huile (1) à monter dans une transmission (100), en particulier à monter dans une transmission de véhicule à moteur, la pièce de conduit d'huile (1) comprenant une conduite (2) ayant un orifice d'entrée (11) et un orifice de sortie (12), la conduite (2) présentant une direction d'acheminement d'huile (F) de l'orifice d'entrée (11) jusqu'à l'orifice de sortie (12) et une paroi de conduite (21) fermée circonférentiellement perpendiculairement à la direction d'acheminement d'huile (F), la pièce de conduit d'huile (1) comprenant en outre au moins une région de collecte d'huile (13a) pour collecter de l'huile acheminée par la conduite (2), la pièce de conduit d'huile (1) comprenant au moins un drain (15a) pour l'huile provenant de ladite au moins une région de collecte d'huile (13a), ladite au moins une région de collecte d'huile (13a) comprenant un premier réservoir (13) ayant une première paroi de réservoir (25) et une première base de réservoir (24), **caractérisée en ce que** ladite au moins une région de collecte d'huile (13a) comprend un deuxième réservoir (14) ayant une deuxième paroi de réservoir (27) et une deuxième base de réservoir (26), la conduite (2) étant adjacente à la première paroi de réservoir (25) et à la deuxième paroi de réservoir (27) de sorte que, vue dans la direction d'acheminement d'huile (F) de la conduite (2), la première base de réservoir (24) est située entre l'orifice d'entrée (11) et l'orifice de sortie (12) et que la deuxième base de réservoir (26) est située entre l'orifice d'entrée (11) et la première base de réservoir (24).

2. Pièce de conduit d'huile (1) selon la revendication 1, **caractérisée en ce que** la pièce de conduit d'huile (1) est conçue pour être montée dans une transmission (100) dans un état de montage prédéterminé, qui définit une orientation de la pièce de conduit d'huile (1) par rapport à la pesanteur (G), dans lequel, dans une orientation correspondant à l'état de montage prédéterminé, la première base de réservoir (24) et la deuxième base de réservoir (26) sont orientées approximativement perpendiculairement à la pesanteur (G) et la direction d'acheminement d'huile (F) de l'orifice d'entrée (11) jusqu'à l'orifice de sortie (12) présente au moins une composante s'étendant à l'opposé de la pesanteur (G).

3. Pièce de conduit d'huile (1) selon la revendication 1 ou 2, **caractérisée en ce qu'**une extrémité de la paroi de conduite (21) du conduit (2) qui est tournée à l'opposé de l'orifice d'entrée (11) forme une paroi (21a) s'étendant au-delà de la première base de réservoir (24) du premier réservoir (13) et délimitant l'orifice de sortie (12).

4. Pièce de conduit d'huile (1) selon l'une des revendications précédentes, **caractérisée en ce que** la conduite (2) est complètement fermée de l'orifice d'entrée (11) jusqu'à l'orifice de sortie (12) et est de forme rectiligne sur au moins 80 % de son étendue longitudinale.

5. Pièce de conduit d'huile (1) selon l'une des revendications précédentes, **caractérisée en ce que** le deuxième réservoir (14) peut être rempli par de l'huile s'écoulant depuis le premier réservoir (13) par l'intermédiaire d'un premier barrage (203).

6. Pièce de conduit d'huile selon l'une des revendications précédentes, **caractérisée en ce que** le premier réservoir (13) est pourvu d'au moins un premier drain (15).

7. Pièce de conduit d'huile selon l'une des revendications précédentes, **caractérisée en ce que** le deuxième réservoir (14) est pourvu d'au moins un deuxième drain (16), l'huile provenant du deuxième réservoir (14) atteignant en particulier le deuxième drain (16) par l'intermédiaire d'un deuxième barrage (204)

8. Pièce de conduit d'huile selon l'une des revendications précédentes, **caractérisée en ce qu'**au moins le premier réservoir (13) est pourvu d'une paroi de séparation (201) s'élevant depuis la première base de réservoir (24), laquelle paroi de séparation divise le premier réservoir (13) en au moins deux zones partielles, l'orifice de sortie (12) s'ouvrant vers une première zone partielle (13b) et la deuxième zone partielle (13c) étant reliée à la première zone partielle (13b) par l'intermédiaire d'une ouverture traversante (202) ménagée dans la paroi de séparation (201).

9. Pièce de conduit d'huile selon la revendication 8, **caractérisée en ce que** la paroi de séparation (201) est conçue sous la forme d'un brise-flots, la paroi de séparation présentant une quille (206) tournée vers l'orifice de sortie (12), à partir de laquelle des parois partielles recourbées vers l'arrière dans des directions opposées s'étendent vers un premier drain (15) et un troisième drain (16a).

10. Pièce de conduit d'huile (1) selon l'une des revendications précédentes, **caractérisée en ce que** la pièce de conduit d'huile (1) est conçue sous la forme d'une pièce à insérer.

11. Transmission (100), en particulier transmission de véhicule à moteur, comprenant un boîtier de transmission (140), une pièce de conduit d'huile (1) disposée dans le boîtier de transmission (100) selon l'une des revendications 1 à 10, et au moins un engrenage de transmission (107) disposé dans le boîtier de transmission (140), lequel engrenage de transmission est au moins partiellement disposé dans un carter d'huile (150) de la transmission (100), la pièce de conduit d'huile (1) étant disposée dans le boîtier de transmission (140) dans un état de montage prédéterminé qui définit une orientation de la pièce de conduit d'huile (1) dans le boîtier de transmission (140) par rapport à la pesanteur (G), de sorte que l'orifice d'entrée (11) soit positionné au niveau de la face d'extrémité de l'engrenage de transmission (107) au moins partiellement disposé dans le carter d'huile (150), que la direction d'acheminement d'huile (F) de l'orifice d'entrée (11) jusqu'à l'orifice de sortie (12) présente au moins une composante s'étendant à l'opposé de la pesanteur (G), et qu'au moins la première base de réservoir (24) soit disposée au-dessus de l'engrenage de transmission (107).

12. Transmission (100) selon la revendication 11, **caractérisée en ce que**, lors du fonctionnement, de l'huile projetée depuis le carter d'huile (150) par l'engrenage de transmission (107) pénètre dans l'orifice d'entrée (11) et s'écoule le long de la direction d'acheminement d'huile (F) du conduit (2) jusqu'à l'orifice de sortie (12).

13. Transmission selon la revendication 11 ou 12, **caractérisée en ce que** le premier réservoir (13) est pourvu d'au moins un premier drain (15) et le deuxième réservoir (14) est pourvu d'au moins un deuxième drain (16), un orifice de drain (17) du premier drain (15) alimentant en huile un palier d'un premier élément de transmission, en particulier le palier (175) d'un arbre de rotor (102) côté entrée monté dans la transmission (100), et un orifice de drain (18) du deuxième drain (16) alimentant en huile un palier d'un deuxième élément de transmission, en particulier un palier (176) d'un pignon (106).
